# EUROPEAN PATENT APPLICATION

(11) **EP 2 075 766 A1**
(43) Date of publication of application: **01.07.2009**
(21) Application number: 07255066.8
(22) Date of filing: 28.12.2007
(51) Int. Cl.: G07C 9/00

(54) **Radio frequency identification devices and processing thereof**

(71) Applicant: British Telecommunications public limited company, 81 Newgate Street London EC1A 7AJ (GB)
(72) Inventor: The designation of the inventor has not yet been filed
(74) Representative: Geffen, Nigel Paul

(57) **Abstract**

A way is provided for a supply chain participant, for example, to learn where to apply for relevant security credentials, for example correct SAML assertions, in relation to a radio frequency identification (RFID) device such as an RFID tag (18). An RFID tag (18) is adapted to provide what may be termed an "invitation tag". The invitation tag (18) holds two types of data: i) a reference that can be resolved to a location (32) for the electronic application for security credentials, and ii) a secret that is used to prove that the party applying for the security credentials currently has possession of the invitation tag (18).

## Description

The present invention relates to radio frequency identification (RFID) devices such as RFID tags, and processing thereof. The present invention also relates to apparatus for implementing such processing. The present invention relates in particular, but not exclusively, to RFID tags attached to or otherwise associated with items in a supply chain.

RFID tags are well known. RFID tags are circuits in the form of label-like items that can be read (and sometimes also written on) by reader (and writer) units communicating with the tags at RF frequencies. Further details of RFID tag technology can found in, for example, Landt, Jerry (2001), "Shrouds of Time: The history of RFID", AIM, Inc.

It is known to attach RFID tags, written with batch or unique codes, to items, and to monitor received items.

An example of a proposed standardised approach using RFID technology is known as EPCglobal, further details of which can be found at, for example, www.epcglobalinc.org or from GS1 US, Princeton Pike Corporate Center, 1009 Lenox Drive, Suite 202, New Jersey 08648 Lawrenceville. EPCglobal is incorporated herein by reference.

EPCglobal has proposed an architecture where each tag is given a 96-bit unique code and where each entity in the supply chain can publish information about the product through a so-called EPC information service. An EPC information service is a database that provides a standardized query interface.

With regard to access to data within a multi-party supply chain, conventionally each party maintains its own data for its own use. If data is required from other parties, then this is obtained through special arrangements. Such arrangements may comprise the data being sent to the other party (e.g. via mail, CD, email, fax or computer application communication). Alternatively, access can be given to the data supplier's systems. Where such access arrangements are provided, typically only the identity of the data recipient is validated and used to authorise the access (for example using a password or digital certificate).

In the separate field of computer access, computer access control standards, such as the OASIS standard XACML, allow the description of access rights to sets of supply chain data. These policies are created in advance of the data access. Policies are formulated specifying the properties that must be true for the subject accessing the data, such as their identity, group, role, or other attributes. These may be expressed in another OASIS (Organization for the Advancement of Structured Information Standards) standard SAML. This standard is incorporated herein by reference.

The present inventors have realised the following disadvantages and limitations of conventional approaches such as those mentioned above. In the approaches described above, the willingness to share data must be defined in advance of the data sharing. Changing such access rights requires human administration, and as such access permissions tend to be long-term and cover a broad set of data. The present inventors foresee a desire or requirement for more dynamic access rights than those conventionally employed. In particular the present inventors envisage a requirement for serial-level access rights that can be automatically determined by serial-level supply chain events. For example, the present inventors foresee it would be desirable for the receipt of a specific item to allow a supply chain participant to be able to access the manufacturing record of that specific item.

In a first aspect the present invention provides an RFID device comprising the following stored data for an entity in possession of the RFID device to use: i) location indication data for resolving to a location where security credentials can be obtained; and ii) secret data for proving to the location that the entity is in possession of the RFID device.

The location indication data may comprise a URL.

The location may be an entity that issues security tokens.

The security tokens may be SAML security tokens.

The secret may comprise a secret key.

The RFID device may further comprise means for the RFID device to authenticate the location.

The RFID device may be a supply chain RFID device.

In a further aspect, the present invention provides an RFID reader system adapted to read-out and process location indication data and secret data from an RFID device, where the location indication data is for resolving to a location where security credentials can be obtained, and where the secret data is for proving to the location that possession of the RFID device is held.

The location indication data may comprise a URL.

The location may be an entity that issues security tokens.

The security tokens may be SAML security tokens.

The security tokens may indicate one or more of the following: a) properties of the entity that issues security tokens, and b) properties of a supply chain.

The secret may comprise a secret key.

In a further aspect, the present invention provides a system for enabling an entity in possession of an RFID device to obtain security credentials; the system comprising: an RFID reader system according to the above aspect; and means for resolving the location data and communicating with the location.

In a further aspect, the present invention provides an apparatus for authenticating that an entity is in possession of an RFID device; the apparatus comprising: means for receiving a secret obtained by the entity from the RFID device; and means for authenticating the received secret.

The apparatus may further comprise means for issuing, responsive to successful authentication, security credentials to the entity.

The security credentials may comprise one or more security tokens.

The security tokens may indicate one or more of the following: a) properties of the entity that issues security tokens, and b) properties of a supply chain.

The secret may comprise a secret key.

In a further aspect, the present invention provides a method of writing an RFID device, comprising writing the RFID device with the following data for an entity in possession of the RFID device to use: i) location indication data for resolving to a location where security credentials can be obtained; and ii) secret data for proving to the location that the entity is in possession of the RFID device.

The location indication data may comprise a URL.

The location may be an entity that issues security tokens.

The security tokens may indicate one or more of the following: a) properties of the entity that issues security tokens, and b) properties of a supply chain.

The secret may comprise a secret key.

The RFID device may be a supply chain RFID device.

In a further aspect, the present invention provides a method of processing an RFID device that is in the possession of an entity; the method comprising: reading out location indication data and secret data from the RFID device, where the location indication data is for resolving to a location where security credentials can be obtained, and where the secret data is for proving to the location that the entity is in possession of the RFID device.

The method of processing may further comprise resolving the location indication data to determine the location.

The method of processing may further comprise forwarding the secret to the location.

The method of processing may further comprise processing the secret to authenticate that the entity is in possession of the RFID device.

The method of processing may further comprise issuing, responsive to successful authentication, security credentials to the entity.

The security credentials may comprise one or more security tokens.

The security tokens may indicate one or more of the following: a) properties of the entity that issues security tokens, and b) properties of a supply chain.

In a further aspect, the present invention provides a method of authenticating that an entity is in possession of an RFID device; the method comprising: receiving a secret obtained by the entity from the RFID device; and authenticating the received secret.

The method of authenticating may further comprise issuing, responsive to successful authentication, security credentials to the entity.

The security credentials may comprise one or more security tokens.

The security tokens may indicate one or more of the following: a) properties of the entity that issues security tokens, and b) properties of a supply chain.

The secret may comprise a secret key.

Aspects of the present invention provide a way for a supply chain participant, for example, to learn where to apply for relevant security credentials, for example correct SAML assertions. Furthermore, for example, aspects of the present invention also provide a capability for a goods possession check before, for example, such SAML assertions are released.

In the following section, the term "RFID tag", will generally be used, the word "tag" indicating that the RFID device may be suitable for "tagging" one or more items. It will be understood that "tags" may be any of a variety of sizes and shapes.

Embodiments of the invention will now be described, by way of example only, with reference to the accompanying drawings, in which:
Figure 1 shows a schematic overview of a system in which an embodiment of the invention may be implemented;
Figure 2 is a combined message sequence chart and process flowchart showing certain messages and data sent, and process steps carried out, in one example of a process of application for a security token;
Figure 3 is a process flowchart showing in more detail certain process steps carried out in one example of a possible variation of the process shown in Figure 2;
Figure 4 is a schematic illustration of the memory of a conventional RFID tag; and
Figure 5 is a schematic illustration of an example of a memory of an "invitation tag".

A first embodiment of a process for an RFID tag in a supply chain to in effect "invite" or otherwise provide means or required information for a party in the supply chain to apply for security credentials in response to information read from the RFID tag received by that party will now be described.

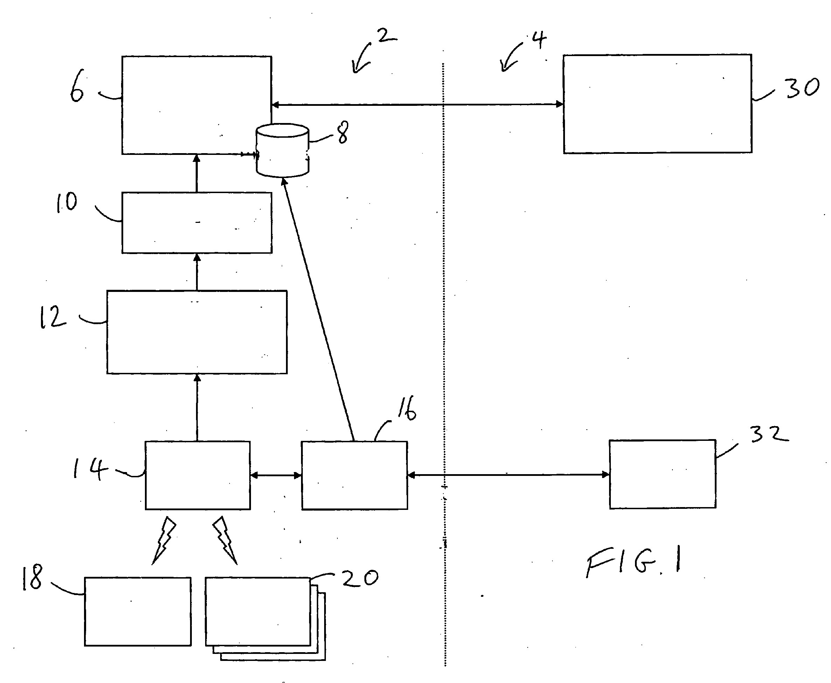

Figure 1 shows a schematic overview of a system 1 in which the first embodiment may be implemented. For ease of understanding, firstly an overview of the process and system will be given below, followed secondly by particular details directed to specific elements of the system 1 as shown in Figure 1.

For ease of reference, an RFID tag adapted according to the present embodiment is referred to below as an "invitation tag".

In this embodiment, except where stated otherwise below, the invitation tag operates according to the EPCGen2 standard. In particular, the EPCGen2 protocol is employed, and EPCGen2-compliant reader hardware is employed. Using such an EPCGen2 standard tag, the EPC field (96 bits) is used to encode a reference to the token issuing system. In other embodiments alternative tags with additional user memory fields may be used to extend or store the reference. This embodiment employs secure authentication of the tag to the remote system. This is achieved in EPCGen2 through the use of an extended custom command. The EPCGen2 protocol (full name Class 1 Generation 2 UHF Air Interface Protocol Standard) is published by EPCglobal, and is incorporated herein by reference.

In this embodiment the RFID tag as used as an invitation to apply for security credentials. The tag holds two types of data:
1. A reference that can be resolved to a location for the electronic application for security credentials
2. A secret that is used to prove that the party applying for the security credentials currently is in physical possession of the RFID tag.

The invitation tag described above is received by a downstream supply chain partner. For example, the invitation tag may be received with the flow of other RFID tagged goods. In this case the invitation contained on the tag can be used to apply for security credentials that may then be used to access systems containing data about these goods.

Upon receiving the invitation tag, the supply chain partner uses the system location reference to establish an electronic communication to apply for security credentials. For example the tag may contain a URL that references a Web Service that provides SAML security tokens.

Once communication is established, the token issuer checks that the applicant is in possession of the invitation tag.

The RFID invitation tag is a secure RFID tag containing a secret. Preferably this secret is unique to the invitation tag or reference. Thus, when an applicant applies for a security credential, the token issuer will know which secret the tag should contain. The token issuer establishes an authentication challenge-response communication with the secure invitation tag to verify that the same secret is held both by the tag and the token issuer. This can be achieved without releasing the secret to the applicant or other intermediate or eavesdropping parties.

Once possession of the invitation tag is determined, a policy is applied by the security token issuer to determine whether the security token is granted to the applicant. For example the security tokens may only be granted if the applicant already has other security tokens or certificates. Such tokens may assert the applicant's identity, or membership within a wider supply chain community.

If the policy of the token issuer is fulfilled, the security token is generated and returned to the applicant. This token is then asserted in the application to further systems containing RFID data such as an EPCIS (EPC Information Services Standard issued by EPCglobal and incorporated herein by reference) or EPC Discovery Service (used to identify which EPCISs may hold data relevant to an EPC). One possibility is for this token to be short-lived to grant only temporary access to this data set. In this manner, once the supply chain partner is no longer in possession of the invitation tag, it will not be able to renew the security token and maintain the level of information access.

This embodiment allows upstream supply chain partners to specify access control policies on their EPC information systems without requiring the identity of all downstream partners. Instead broader policies can be set up, such a broader policy specifying, for example, the possession of a security token instead of a party's identity or other credentials. Possession of this token can allow access to a pre-determined set of supply chain information, for example.

In more detail, in this embodiment the invitation tag is constructed using a EPCGen2 UHF RFID Tag with additional user memory, and a tag authentication command implemented as a custom command and built on a symmetric cryptographic function, here Advanced Encryption Standard (AES) and a secret key. AES is a Federal Information Processing Standards Publication (FIPS PUBS) issued by the National Institute of Standards and technology (NIST) of the USA, and this standard is incorporated herein by reference.

A tag authentication scheme as described by Feldhofer [Martin Feldhofer, Sandra Dominikus, Johannes Wolkerstorfer. "Strong Authentication for RFID Systems using the AES Algorithm". Proceedings of CHES 2004 (Boston, USA, August 11-13, 2004)] and incorporated herein by reference is used in this embodiment for implementation of the invitation tag. This tag authentication scheme uses the AES symmetric cryptographic primitive. 128 bits of tag memory are reserved for the AES secret key. 64 bits are retained for the manufacturer tag identifier (TID) to uniquely identify the invitation tag. The remaining memory is available for the encoding of the reference to the Token Issuer. This can be represented as a URL to a Web Service, and IP address, or using any other address encoding scheme that can be resolved to make a communication to the Token Issuer. A further possible resolution method for this reference is to make use of a directory to different Token Issuers.

In this embodiment a tag with 512 bits of memory is employed, leaving 320 bits for the encoding of the Token Issuer reference. In this embodiment the tag is adapted from a "Philips Ucode" (trademark) chip.

When making use of this embodiment, a supply chain party issuing the invitations obtains a quantity of invitation tags as described above. By way of example, let us consider that the manufacturer of a particular product wishes to invite other parties further along a supply chain to be able to access production information on their EPC Information Service. In this case the manufacturer establishes a security policy for its EPCIS that grants access to production information to any client who possesses "Token A". It also establishes a Token Issuing service for Token A and defines a policy for releasing Token A to applicants who have received the Invitation Tag. In this case let us suppose that the manufacturer describes a policy that will generate such a token only if the Applicant is also a member of "Supply Chain Federation B". When Token A is defined on the Token Issuing service, a secret key of 128 bits is randomly generated for that token.

The manufacturer in this scenario can now generate an invitation tag. The manufacturer encodes a reference for the application to the Token Issuer specifically for Token A. An encoding as a URL might take the form http://tokenissuer.manufacturer.com//TokenA. The manufacturer also writes the 128 bit secret key onto the tag that relates to the security token for which the invite is being issued.

The invitation tag is now ready for release and is placed on a packaging label for a product pallet when it is shipped downstream. Providing that the invitation tag is not removed from the pallet, any party receiving the pallet may accept the invitation to apply for security Token A. A further possibility is that if it is envisaged that the pallet may be split, multiple invitation tags may be included in the shipment.

On receiving the pallet a downstream party sends an inventory request from their RFID reader. Using the normal EPCGen2 protocol this returns the EPCs of one or more standard EPCGen2 RFID tags associated with the pallet, cartons or product items. It also returns the first 96 bits of the reference stored on the invitation tag. Intelligence in the reader or back-end system behind the reader is arranged to recognise the presence of the invitation tag in the result set obtained by the reader. At this point the reader issues further instructions to obtain the remaining reference data from the invitation tag. This may be implemented as read requests to user memory segments, or as a custom command if desired.

Once the full reference is retrieved from the invitation tag, the Applicant establishes a communication with the Token Issuer. The Token Issuer may be, for example, a SAML attribute authority.

Before issuing Token A to the Applicant, the Token Issuer first checks the authenticity of the invitation tag. This stops copying of the information on the invitation tag and the distribution of the invite to parties who do not hold the invitation tag. A unilateral authentication of the tag to the Token Issuer is sufficient, although in other embodiments a mutual authentication scheme can be used. For unilateral authentication the Token Issuer generates a random nonce and returns this value to the Applicant. The Applicant then uses the RFID reader to issue a custom command over EPCGen2 to the invitation tag. This custom challenge command contains the nonce provided by the Token Issuer. The invitation tag performs an AES encryption using its 128 bit secret key over the random nonce and returns this response to the RFID reader and thereby the Applicant. The Applicant then returns the response to the Token Issuer to prove possession of the invitation tag. Using a unilateral authentication scheme it is theoretically possible for an attacker to probe the invitation tag for all possible responses to challenges, but with a long enough nonce this attack will not tend to be feasible in practice.

(Embodiments employing mutual authentication will tend to provide additional security since the tag can authenticate the validity of the challenge before issuing a response. In such a scheme the Token Issuer issues a challenge that consists of both a random nonce, and an encryption of the nonce with the invitation tag secret. The invitation tag checks that that it can obtain the same encrypted value before issuing a response using both the random nonce from the Token Issuer and a new nonce generated by the invitation tag.)

In this embodiment, once possession of the invitation tag is proved by the Applicant, the Token Issuer checks if further restrictions are applied to the issuance of Token A. However, this need not take place in other embodiments. In the present scenario we have considered that the policy also requires that the Applicant is a member of "Supply Chain Federation B". During the initial application between the Applicant and the Token Issuer, the Applicant included a SAML token asserting such membership, so this policy is fulfilled. Note that this policy enforcement step could be performed before the Invitation Tag authentication stage. Also note that different communication models are possible between the Applicant and the Token Issuer where negotiation takes place for which tokens the Applicant must provide.

Another possibility, by way of example, of a restriction that may be applied is proof of other events in the supply chain. For example the Token Issuer may require, in addition to possession of the invitation tag, proof of a shipping notice from a previous holder of the invitation tag or other known party. This proof of receipt can be implemented by providing a token in the shipping notice. Such a token may be signed by the sender of the shipping notice and valid only for the intended recipient.

Another possibility (which may be implemented with any one or more of the other above-identified possibilities) is as follows. Once the Token Issuer has validated both possession of the invitation tag and any further policy restriction it can construct and issue Token A to the Applicant. This token is only valid for the Applicant and cannot be passed to other parties. The token may, for example, also include time restrictions, automatically expiring the access rights granted by possession of Token A.

Another possibility (which may be implemented with any one or more of the other above-identified possibilities) is that once the Applicant has Token A, it places the token in a token store for use by other applications within the same company or security domain. When a client application wishes to access the EPC Information Services of another company, the client application selects which tokens to include in the communication. This can be implemented in several ways:
1. The Applicant can guess which EPCs and external information services the token may be useful for. The EPCs can be deduced from the other RFID EPC values read during the same time period by the RFID reader as the Invitation Tag. The information services may be ones that have the same IP or DNS suffix as the Token Issuer. This approach will not always be suitable since some EPCs may be read at a later stage, and the Token Issuer may be a third party.
2. The information service may instruct the client application as to which tokens need to be provided
3. The Token Issuer may provide information along with the token describing where the token should be applied
4. Information describing where the token should be applied may be included on the invitation tag itself. This may require additional memory to be provided on the tag.

By way of example, let us consider option 2 in further detail. The client application communicates with the manufacturer's EPCIS with a query for the production information for EPC 123456789, say. The EPCIS replies to the client application stating that additional security credentials are required to perform the service requested. The client application selects a number of security tokens from the token store and returns them to the EPCIS to fulfil the requirements. The EPCIS then performs the search of the EPC data repository and returns the requested production information to the client application.

As mentioned above, Figure 1 shows a schematic overview of a system 1 in which the above described embodiment may be implemented. More particularly, the elements of the system are shown located in either an Applicant Domain 2 (to the left of the vertical dotted line) or in an External Systems Domain 4 (to the right of the vertical dotted line).

The Applicant Domain 2 comprises an EPC Information Client 6, which itself comprises a Token Store 8, an EPC Repository 10 (which in this embodiment implements, for example, EPCIS), an EPC Collection and Processing Module 12 (which in this embodiment implements, for example, Application Level Events (ALE) and Capture Application), an RFID reader system 14, an Applicant 16, an invitation tag 18 and one or more product tags 20. The Applicant 16 is coupled to the RFID reader system 14. The RFID reader system is arranged to read the invitation tag 18 and the product tags 20. The RFID is further coupled to the EPC Collection and Processing Module12. The EPC Collection and processing Module 12 is further coupled to the EPC Repository 10. The EPC Repository 10 is further coupled to the EPC Information Client 6. The Applicant 16 and the Token Store 8 are also coupled to each other.

In this embodiment, the RFID reader system 14 comprises a conventional RFID reader coupled to a separate processing module for performing the processes described below. Furthermore, in this embodiment, the RFID reader and the separate processing module are collocated, i.e. both at the same premises of an entity requiring to process the received invitation tag 18. However, in other embodiments, the RFID reader system 14 may be implemented in other ways. One possibility is that a single integrated apparatus may be provided performing all the functionality of the RFID reader system 14. Another possibility is that the RFID reader system 14 may comprise a conventional RFID reader coupled to a plurality of separate processing modules for performing the processes described below. Another possibility is that the RFID reader system 14 may comprise a conventional RFID reader coupled to a plurality of separate processing modules for performing the processes described below, with one or more of the separate processing modules being provided as a distributed system, i.e. physically located remote from the RFID reader, e.g. at different premises to that where the RFID reader is located.

The External Systems Domain 4 comprises an EPC Information System 30 and a Token Issuer 32. The EPC Information System 30 is coupled to the EPC Information Client 6. The Token Issuer 32 is coupled to the Applicant 16.

In operation, and as discussed in more detail already above, the following operations take place. The RFID reader system 14 reads the received invitation tag 18 and where applicable the received product tag(s) 20. An invitation tag reference is passed between the RFID reader system 14 and the Applicant 16. A token application is passed between the Applicant 16 and the Token Issuer 32. A proof of possession challenge occurs between the Token Issuer 32 and the RFID reader system 14. A token or tokens are returned from the Token Issuer 32 to the Applicant 16. Product/package tag information gleaned by the RFID reader system 14 from reading the invitation tag 18 is sent to the EPC Collecting and Processing Module 12. The EPC Collection and Processing Module 12 operates on the received product/package tag information, for example implementing ALE and Capture Application, and forwards the outcomes to the EPC Repository 10. The EPC Repository 10 operates on the received outcomes, for example implementing EPCIS, and forwards the outcomes to the EPC Information Client 6. Also, the token(s) are sent from the Applicant 16 to the Token Store 8 of the EPC Information Client 6. The EPC Information Client 6 processes the received outcomes and token(s) and interacts with the EPC Information System 30, which is for example also implementing EPCIS, accordingly. During this interaction the EPC Information Client 6 selects the appropriate tokens from the Token Store 8, as required by the EPC Information System 30.

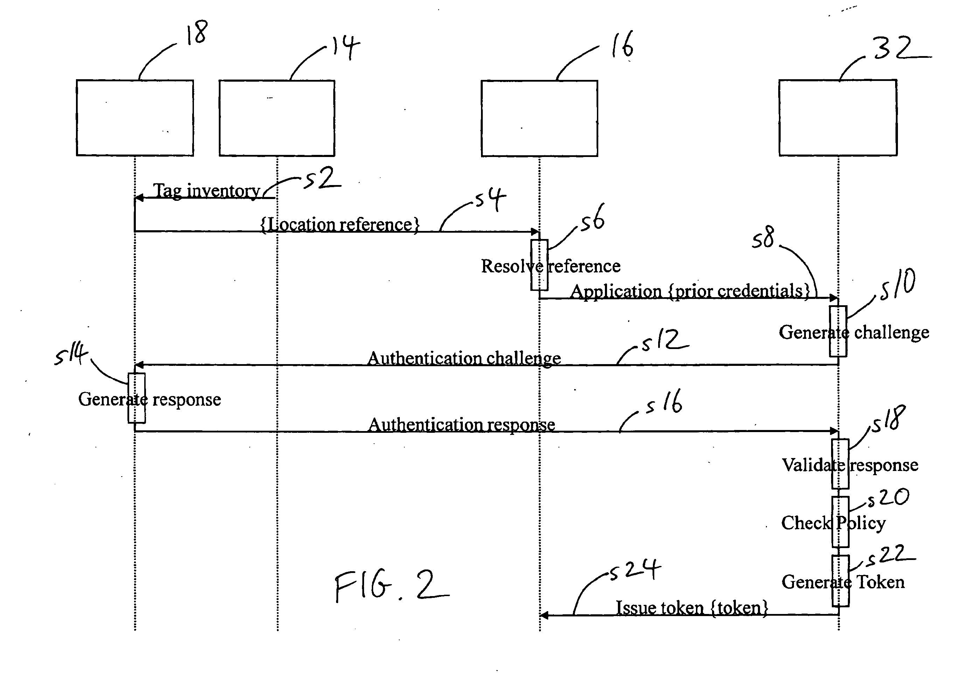

Figure 2 is a combined message sequence chart and process flowchart showing certain messages and data sent between the invitation tag 18, the RFID reader system 14, the Applicant 16 and the Token Issuer 32, and certain process steps carried out by these elements, in one example of a process of application for a security token suitable for implementation with the above described embodiment.

At step s2, the RFID reader system 14 sends a tag inventory query to the invitation tag. At step s4, the invitation tag 18 responds by sending a location reference message to the Applicant 16. At step s6, the Applicant 16 resolves the received location reference to determine a network communication address for the Token Issuer 32. During step s6 the Applicant 16 also determines which "Application prior credentials" should be communicated to the Token Issuer 32 during step s8. These "Application prior credentials" may be security tokens or alternative credentials required for authentication and authorisation by the Token Issuer 32. At step s8, the Applicant sends the determined "Application prior credentials" to the Token Issuer 32, along with the location reference from the invitation tag 18. At step s10, the Token Issuer 32 generates an authentication challenge for the invitation tag 18. At step s12, the Token Issuer 32 sends the generated authentication challenge to the invitation tag (via, for example, the Applicant 16 and the RFID reader system 14). At step s14, the invitation tag 18 generates a response to the received authentication challenge. At step s16, the invitation tag sends the generated response to the Token Issuer (via for example the RFID reader system 14 and the Applicant 16). At step s18, the Token Issuer 32 validates the received response. At step s20, the Token Issuer 32 check's the policy stored for the identified invitation tag 18. At step s22 the Token issuer 32 generates the appropriate token dependent upon the policy criteria. At step s24, the Token Issuer 32 sends, i.e. issues, the token to the Applicant 16.

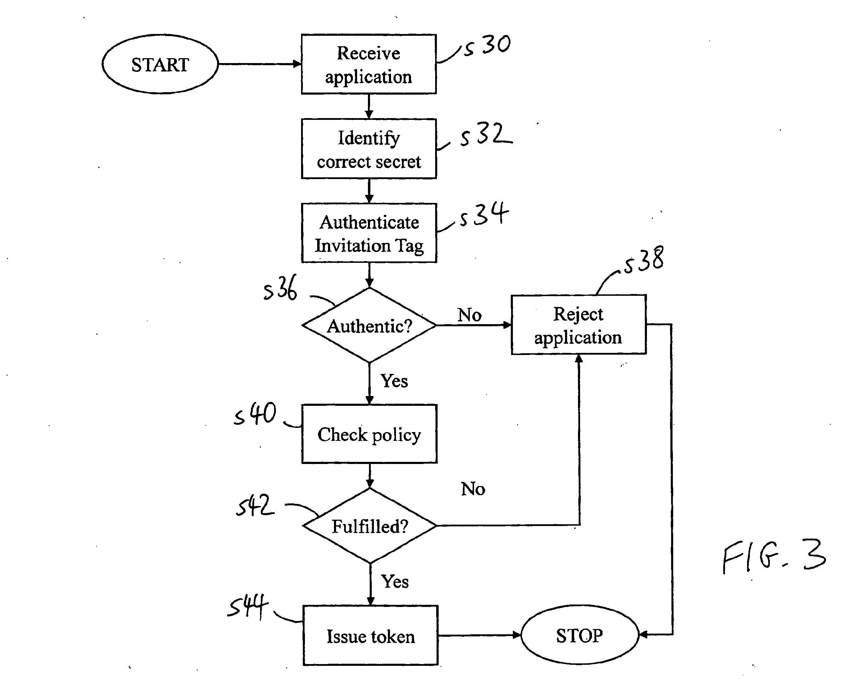

Figure 3 is a process flowchart showing in more detail certain process steps carried out by the Token Issuer 32 in one example of a possible variation of the process described above with reference to Figure 2.

At step s30 the Token Issuer 32 receives an application for security tokens from the Applicant 16. At step s32, the Token Issuer 32 processes the received application to identify the correct secret held by the invitation tag 18. At step s34, the Token Issuer 32 uses the identified correct secret to attempt to authenticate the invitation tag 18. If the outcome of the attempted authentication is negative, then as indicated by decision box s36, the process moves to step s38, where the Token Issuer 32 rejects the application, and thereafter the process ends. If, however, the outcome of the attempted authentication is positive, then as further indicated by decision box s36, the process moves to step s40, where the Token Issuer 32 checks the policy stored for the identified invitation tag 18. If the outcome of the policy check is that the policy criteria are not fulfilled, then as indicated by decision box s42, the process moves to step s38, where the Token Issuer 32 rejects the application, and thereafter the process ends. If, however, the outcome of the policy check is that the policy criteria are fulfilled, then as further indicated by decision box s42, the process moves to step s44, where the Token Issuer 32 issues the token or tokens, and thereafter the process ends.

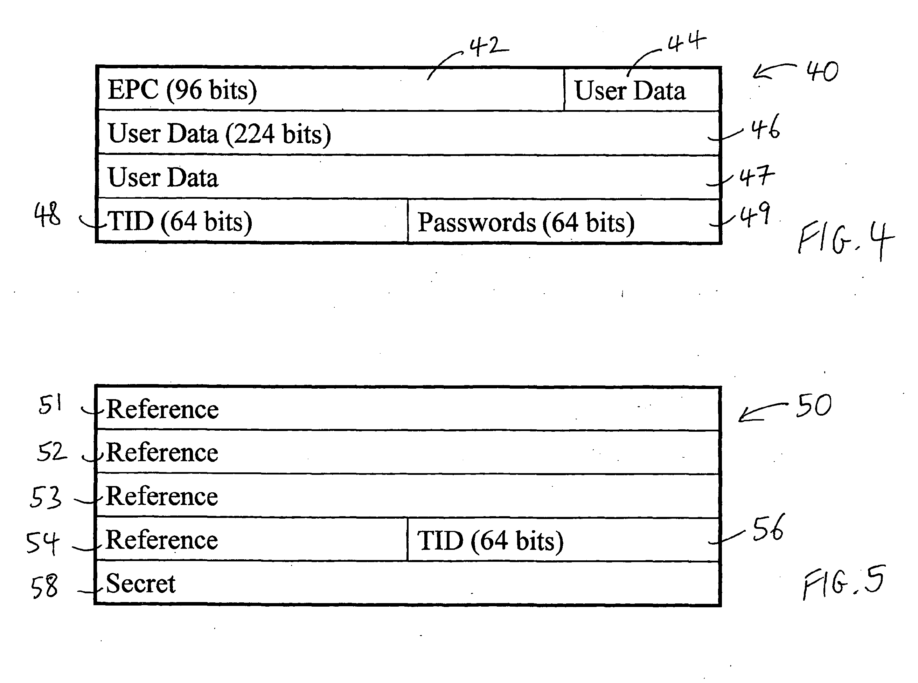

Further details of the invitation tag 18, and in particular the memory thereof, will now be described with reference to Figures 4 and 5. By way of comparison, Figure 4 is a schematic illustration of the memory 40 of a conventional Philips Ucode (trademark) RFID tag. This conventional tag memory 40 comprises 96 bits of EPC data (indicated by reference numeral 42), user data (indicated by reference numeral 44), 224 bits of user data (indicated by reference numeral 46), further user data (indicated by reference numeral 47), a 64 bit tag identifier (TID) (indicated by reference numeral 48), and 64 bits of passwords (indicated by reference numeral 49). This conventional tag memory 40 comprises 512 bits in total.

Figure 5 is a schematic illustration of an example of a memory 50 of an invitation tag 18 for use in the above described embodiments. The invitation tag memory 50 comprises a reference field (indicated by reference numerals 51, 52, 53, 54) with 320 bits encoding the URL of the Token Issuer 32). The reference field may be retrieved in multiple operations from the invitation tag 18. An implementation based upon an EPCGen2 tag retrieves the first 96 bits of the reference (indicated in Figure 5 by reference numeral 51) in the initial inventory command, and the subsequent 224 bits by requesting additional memory registers (from respective portions, indicated by reference numerals 52, 53, 54). The invitation tag memory 50 further comprises a 64 bit tag identifier (TID) (indicated by reference numeral 56). The invitation tag memory 50 further comprises a secret field (indicated by reference numeral 58) with 128 bits to support AES-based authentication. This invitation tag memory 50 also comprises 512 bits in total. However, it will be appreciated that in other embodiments any suitable RFID tag may be implemented or adapted for use as the invitation tag.

In the above embodiment the Applicant may be a computer system connected directly to the RFID reader system, or to a collection and processing system, such as an ALE compliant system, that passes the invitation tag reference to the Applicant. In a system compliant with EPCGen2 and the EPCglobal Reader Protocol, only the first 96 bits of the reference will initially be passed to the Applicant. The Applicant will then issue further instructions to the RFID reader system to retrieve the remaining segments of the invitation tag reference. However, in other embodiments, the Applicant may be implemented as, or its role performed, by any other suitable element, for example integrated into the RFID reader system.

In the above described embodiment the invitation tag is processed in a supply chain. However, in other embodiments, the RFID tag may be processed in other scenarios involving interrogation of RFID tags.

In the above described embodiment, the tag is an adapted "Philips Ucode" (trademark) chip. Also the invitation tag generally operates according to the EPCGen2 standard. In particular, the EPCGen2 protocol is employed, and EPCGen2-compliant reader hardware is employed. However, in other embodiments, other RFID tags may be used or adapted, including RFID tags compliant with other standards, and corresponding other standards-compliant reader hardware may be employed.

In the above described embodiment, the invitation tag holds two types of data: 1) a reference that can be resolved to a location for the electronic application for security credentials, and 2) a secret that is used to prove that the party applying for the security credentials currently is in physical possession of the RFID tag. With regard to the location reference, it will be appreciated that any appropriate reference, and any appropriate location, may be employed. The term location is of course not limited to a geographical location, rather this term is used to mean any suitable determination of the relevant source of information. Moreover, the form of the secret may be any suitable form, i.e. it is not limited to the form described in the above embodiment.

In the above embodiment a policy is applied by the security token issuer to determine whether the security token is granted to the applicant. The policy may be in any suitable form, and may contain one or more criteria.

In the above embodiment a token issuer is employed, and accordingly issues one or more tokens, as described above, as part of the overall process. However, in other embodiments, other identifiable forms of communication or indication may be employed instead of tokens as such.

In the above described embodiment, elements as described with reference to Figure 1, and arranged as in Figure 1, are employed. However, in other embodiments, other elements may be employed, or the same elements may be employed but arranged differently.

Further, it should be noted that one or more of the process steps and messages depicted in Figures 1-3 and described above may be replaced by other steps achieving the same purpose(s), or where possible such process steps and messages may be performed in differing order to that presented above and shown in the Figures. Furthermore, although all the process steps and messages have, for convenience and ease of understanding, been depicted as discrete temporally-sequential steps, nevertheless some of the process steps and messages may in fact be performed simultaneously or at least overlapping to some extent temporally.

Finally, while embodiments of the invention have been described in relation to radio frequency devices, it will be understood that some of the concepts described may also be applicable to other types of identification devices other than those which make use of radio frequency communication channels.

## Claims

1. An RFID device (18) comprising the following stored data for an entity in possession of the RFID device (18) to use:
i) location indication data for resolving to a location (32) where security credentials can be obtained; and
ii) secret data for proving to the location (32) that the entity is in possession of the RFID device (18).

2. An RFID device (18) according claim 1, wherein the location indication data comprises a URL.

3. An RFID device (18) according to claim 1 or 2, wherein the location (32) is an entity that issues security tokens.

4. An RFID device (18) according to claim 3, wherein the security tokens are SAML security tokens.

5. An RFID device (18) according to claim 3 or 4, wherein the security tokens indicate one or more of the following: a) properties of the entity that issues security tokens, and b) properties of a supply chain.

6. An RFID device (18) according to any of claims 1 to 5, wherein the secret comprises a secret key.

7. An RFID device (18) according to any of claims 1 to 6, further comprising means for the RFID device (18) to authenticate the location (32).

8. An RFID device (18) according to any of claims 1 to 7, wherein the RFID device (18) is a supply chain RFID device.

9. An RFID reader system (14) adapted to read-out and process location indication data and secret data from an RFID device (18), where the location indication data is for resolving to a location (32) where security credentials can be obtained, and where the secret data is for proving to the location (32) that possession of the RFID device (18) is held.

10. An RFID reader system (14) according to claim 9, wherein the location indication data comprises a URL.

11. An RFID reader system (14) according to claim 9 or 10, wherein the location (32) is an entity that issues security tokens.

12. An RFID reader system (14) according to claim 11, wherein the security tokens are SAML security tokens.

13. An RFID reader system (14) according to claim 11 or 12, wherein the security tokens indicate one or more of the following: a) properties of the entity that issues security tokens, and b) properties of a supply chain.

14. An RFID reader system (14) according to any of claims 9 to 13, wherein the secret comprises a secret key.

15. A system for enabling an entity in possession of an RFID device (18) to obtain security credentials; the system comprising:
an RFID reader system (14) according to any of claims 9 to 14; and
means (16) for resolving the location data and communicating with the location (32).

16. Apparatus (32) for authenticating that an entity is in possession of an RFID device (18); the apparatus comprising:
means for receiving a secret obtained by the entity from the RFID device (18); and
means for authenticating the received secret.

17. Apparatus (32) according to claim 16, further comprising means for issuing, responsive to successful authentication, security credentials to the entity.

18. Apparatus (32) according to claim 17, wherein the security credentials comprises one or more security tokens.

19. Apparatus (32) according to claim 18, wherein the security tokens indicate one or more of the following: a) properties of the entity that issues security tokens, and b) properties of a supply chain.

20. Apparatus (32) according to any of claims 16 to 19, wherein the secret comprises a secret key.

21. A method of writing an RFID device (18), comprising writing the RFID device (18) with the following data for an entity in possession of the RFID device (18) to use:
i) location indication data for resolving to a location (32) where security credentials can be obtained; and
ii) secret data for proving to the location (32) that the entity is in possession of the RFID device (18).

22. A method of writing an RFID device (18) according claim 21, wherein the location indication data comprises a URL.

23. A method of writing an RFID device (18) according to claim 21 or 22, wherein the location (32) is an entity that issues security tokens.

24. A method of writing an RFID device (18) according to claim 23, wherein the security tokens indicate one or more of the following: a) properties of the entity that issues security tokens, and b) properties of a supply chain.

25. A method of writing an RFID device (18) according to any of claims 21 to 24, wherein the secret comprises a secret key.

26. A method of writing an RFID device (18) according to any of claims 21 to 25, wherein the RFID device (18) is a supply chain RFID device.

27. A method of processing an RFID device (18) that is in the possession of an entity; the method comprising:
reading out location indication data and secret data from the RFID device (18), where the location indication data is for resolving to a location (32) where security credentials can be obtained, and where the secret data is for proving to the location (32) that the entity is in possession of the RFID device (18).

28. A method of processing an RFID device (18) according to claim 27, further comprising resolving the location indication data to determine the location (32).

29. A method of processing an RFID device (18) according to claim 28, further comprising forwarding the secret to the location (32).

30. A method of processing an RFID device (18) according to claim 29, further comprising processing the secret to authenticate that the entity is in possession of the RFID device (18).

31. A method of processing an RFID device (18) according to claim 30, further comprising issuing, responsive to successful authentication, security credentials to the entity.

32. A method of processing an RFID device (18) according to claim 31, wherein the security credentials comprise one or more security tokens.

33. A method of processing an RFID device (18) according to claim 32, wherein the security tokens indicate one or more of the following: a) properties of the entity that issues security tokens, and b) properties of a supply chain.

34. A method of authenticating that an entity is in possession of an RFID device (18); the method comprising:
receiving a secret obtained by the entity from the RFID device (18); and
authenticating the received secret.

35. A method of authenticating according to claim 34, further comprising issuing, responsive to successful authentication, security credentials to the entity.

36. A method of authenticating according to claim 35, wherein the security credentials comprises one or more security tokens.

37. A method of authenticating according to claim 36, wherein the security tokens indicate one or more of the following: a) properties of the entity that issues security tokens, and b) properties of a supply chain.

38. A method of authenticating according to any of claims 34 to 37, wherein the secret comprises a secret key.
